# DEMANDE DE BREVET EUROPEEN

(11) **EP 3 243 764 A1**
(43) Date de publication de la demande: **15.11.2017**
(21) Numéro de dépôt: 17167179.5
(22) Date de dépôt: 20.04.2017
(51) Int. Cl.: B65D 83/54, B65D 83/72, G01J 5/00

(54) **DÉTECTION DE LA PRÉSENCE D'UN PRODUIT PROJETÉ SUR UNE SURFACE**

(30) Priorité: 12.05.2016 FR 1654261
(71) Demandeur: NEMERA LA VERPILLIERE, 38290 La Verpillière (FR)
(72) Inventeur: PINTUS, Pierre, 38070 SAINT-QUENTIN-FALLAVIER (FR)
(74) Mandataire: de la Bigne, Guillaume Michel Marie

(57) **Abrégé**

L'invention concerne un procédé de détection de la présence d'un produit (P) projeté sur une surface d'application (S), dans lequel on projette par impulsion (moyens de projection 34), sur une zone cible (C) de la surface d'application (S), un produit (P) à appliquer sur la surface (S) d'application.

Avant de projeter le produit (P), on le chauffe (moyens de chauffage 32) à une température supérieure à une valeur de température prédéterminée.

Après avoir projeté le produit (P), on mesure à distance une valeur d'un paramètre représentatif de la température de la zone cible (C), et on compare la valeur de ce paramètre à une valeur de référence de ce paramètre.

L'invention concerne également une installation de détection comprenant des moyens de projection (34) à impulsions faisant partie d'un dispositif commun (32) avec des moyens de chauffage.

## Description

L'invention concerne le domaine de la détection de la présence d'un produit projeté sur une surface.

Elle concerne plus particulièrement les procédés de détection de la présence d'un lubrifiant projeté sur la surface d'un élément destiné à coulisser dans un autre.

Lorsqu'il est nécessaire d'appliquer du lubrifiant en faible quantité sur une surface difficile d'accès et/ou de petite taille, par exemple entre deux pièces de petites dimensions, on l'applique de préférence par projection afin d'en maîtriser l'application.

Or il est important, lorsque l'on applique par projection un lubrifiant sur une surface, de s'assurer que le lubrifiant a bien atteint la zone, dite zone cible, de cette surface où l'on désire appliquer le lubrifiant.

En effet, du fait de l'application par projection, le lubrifiant peut ne pas atteindre la zone cible. Cela peut survenir si la projection se fait à trop grande distance de la zone cible, ou, dans le cas où les moyens de projection sont obstrués.

Dans certaines circonstances, il peut également arriver que l'on ne détecte que très tardivement que le lubrifiant n'a pas été appliqué correctement sur la zone cible, notamment lorsque la zone cible fait partie d'un ensemble nécessitant plusieurs étapes d'assemblage. Cette détection peut néanmoins être assurée par contrôle visuel d'un opérateur. Toutefois ce contrôle visuel présente un coût non négligeable et nécessite que l'opérateur soit proche de la zone cible, ce qui n'est pas toujours réalisable dans un environnement automatisé.

Par exemple, si l'application du lubrifiant intervient dans le contexte de l'assemblage d'un dispositif tel qu'une valve doseuse de distribution d'un produit pharmaceutique, il arrive que l'on ne s'aperçoive que le lubrifiant n'a pas été appliqué sur la zone cible qu'au moment des phases finales de test du dispositif intégralement assemblé. Ceci conduit à mettre le dispositif au rebut très tardivement dans le procédé de production du dispositif, générant des pertes de temps et de gain.

L'invention a donc pour but de détecter efficacement la présence d'un produit projeté sur une surface.

A cet effet, l'invention a pour objet un procédé de détection de la présence d'un produit projeté sur une surface d'application, dans lequel :
- on projette, sur une zone cible de la surface d'application, une dose de produit à appliquer sur la surface d'application,
caractérisé en ce que :
- avant de projeter le produit, on le chauffe à une température supérieure à une température prédéterminée,
- après avoir projeté le produit, on mesure à distance une valeur d'un paramètre représentatif de la température de la zone cible, et
- on compare la valeur de ce paramètre à une valeur de référence de ce paramètre.

Grâce au fait que l'on chauffe le produit avant de le projeter, par exemple à une température comprise entre 41 et 80°C, de préférence 70°C, il est possible de détecter sa présence sur la zone cible en mesurant la valeur d'un paramètre représentatif de la température de la zone cible.

En effet, si le produit est bien présent sur cette zone cible, on pourra détecter sa température et/ou l'élévation de la température de la zone cible due à la présence du produit après sa projection. Si au contraire le produit est absent de la zone cible, la température de la zone cible restera la même après la projection du produit. Par ailleurs, ce procédé permet une détection du produit pouvant être effectuée à distance, ce qui s'avère particulièrement utile lorsque la zone cible est difficile d'accès et/ou pour éviter tout risque de contamination bactérienne en cas d'utilisation de moyens de détection par contact.

Avantageusement, on mesure la valeur du paramètre à l'aide de moyens de mesure de température à distance, de type caméra à infrarouges, pyromètre, ou scanner à infrarouges.

De manière avantageuse, les moyens de mesure à distance sont aptes à capter une image thermographique du produit reçu par la zone cible, et dans lequel on traite et on analyse cette image thermographique à l'aide de moyens de traitement d'image pour quantifier la quantité de produit reçue par la zone cible.

Afin de mieux maîtriser la quantité de produit projeté sur la surface d'application, une dose de produit est avantageusement formée par au moins une impulsion de moyens de projection de produit.

De préférence, la valeur de référence du paramètre est celle d'un paramètre représentatif de la température de la zone cible de la surface d'application avant de projeter le produit, ou représentatif de l'environnement dans lequel la zone cible se situe lors de la mesure à distance de la valeur du paramètre, ou une valeur de température préétablie. Cette température est par exemple comprise entre 15°C et 40°C, de préférence 23°C.

De préférence, on chauffe le produit à une température comprise entre 41 °C et 80°C, de préférence 70°C.

Dans un mode de réalisation particulier de l'invention, le produit projeté est un lubrifiant, par exemple du silicone.

Dans un mode de réalisation particulier de l'invention, la surface d'application est celle d'une tige de valve doseuse de distribution d'un produit pharmaceutique.

Dans un mode de réalisation particulier de l'invention, la surface d'application est celle d'un embout de pulvérisation d'un produit pharmaceutique destiné à être raccordé à une pompe d'aspiration et de distribution de ce produit, ou celle d'un élément d'une pompe d'aspiration et de distribution de produit pharmaceutique.

L'invention concerne également une installation de détection de la présence d'un produit projeté sur une surface d'application, comprenant :
- des moyens de projection aptes à projeter, sur une zone cible de la surface d'application, une dose de produit à appliquer sur la surface d'application,
caractérisée en ce qu'elle comprend en outre :
- des moyens de chauffage aptes à chauffer le produit, avant sa projection, à une température supérieure à une température prédéterminée ;
- des moyens de mesure à distance aptes à mesurer, après avoir projeté le produit, une valeur d'un paramètre représentatif de la température de la zone cible, et
- des moyens de comparaison de la valeur de ce paramètre à une valeur de référence de ce paramètre.

De manière avantageuse, l'installation comprend des moyens de mesure à distance de type thermographique aptes à capter une image thermographique du produit reçu par la zone cible, et des moyens de traitement d'image aptes à extraire de l'image thermographique du produit une information sur la quantité de produit reçu par la zone cible.

Afin de mieux maîtriser la quantité de produit projeté sur la surface d'application, les moyens de projection comprennent avantageusement des moyens de projection de produit par impulsions, la dose de produit étant formée par au moins une impulsion de ces moyens de projection par impulsions.

Afin que l'installation soit plus compacte, les moyens de chauffage et les moyens de projection font avantageusement partie d'un dispositif commun porté par un support réglable.

L'invention sera mieux comprise à la lecture de la description qui va suivre des figures annexées, qui sont fournies à titre d'exemples et ne présentent aucun caractère limitatif, dans lesquelles :
- la figure 1 est une vue en coupe d'une valve doseuse de distribution d'un produit pharmaceutique ;
- la figure 2 est une vue en perspective d'une installation de détection selon un mode de réalisation particulier de l'invention ;
- la figure 3 est une vue de face d'un détail III de la figure 2 ;
- la figure 4 est une vue en coupe d'une pompe d'aspiration et de distribution d'un produit pharmaceutique ;
- les figures 5 à 7 sont des vues en coupe de différents éléments de la pompe de la figure 4.

Dans la suite, les indications « horizontal », et « vertical » ne sont qu'indicatives et non limitatives.

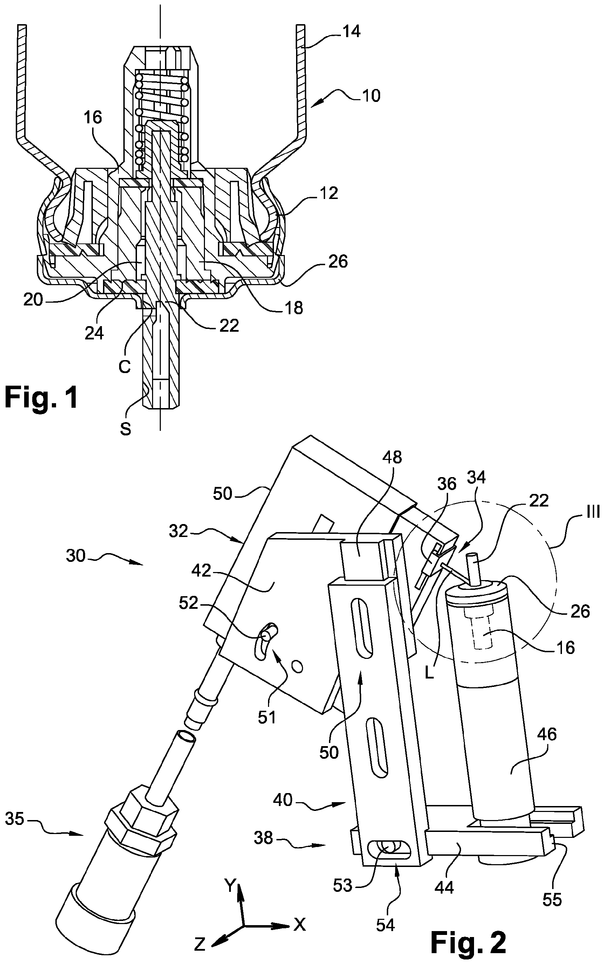

On a représenté sur la figure 1 une valve doseuse 10 de distribution de produit pharmaceutique, de forme générale de révolution, montée sur un col 12 d'un réservoir 14. Le réservoir 14 contient un fluide à distribuer sous forme d'aérosol, tout particulièrement un produit pharmaceutique.

La valve doseuse 10 comprend un corps de valve 16, de forme générale de révolution, comportant un logement de réception d'une bague de réduction 18 délimitant une chambre de dosage 20 dans le corps de valve 16.

Une tige de valve 22 est montée coulissante axialement dans la bague de réduction 18 et donc dans la chambre de dosage 20.

L'étanchéité entre la chambre de dosage 20 et l'extérieur du corps de valve 16 est assurée par un premier joint d'étanchéité annulaire, dit joint interne 24. Le joint interne 24 est intercalé axialement entre la tige de valve 22 et une coupelle de valve 26 sertie sur le col 12 du réservoir 14. La tige de valve 22 coulisse de façon étanche à travers le joint interne 24 qui participe aussi à son guidage axial.

Afin de s'assurer que la tige de valve 22 va coulisser aisément dans la chambre de dosage 20, sans trop frotter contre le joint interne 24, on cherche au cours de la fabrication de la valve doseuse 10 à distribuer un lubrifiant, tel que du silicone, sur une zone cible C d'une surface d'application S de la tige valve 22.

La zone cible C est en l'occurrence une zone de la surface de la tige de valve 22, située à la jonction entre la tige de valve 22 et la coupelle de valve 26, du côté libre de la tige de valve 22 (bas de la figure 1) qui sera le seul accessible une fois la tige de valve 22 montée dans le corps de valve 16.

On a représenté à la figure 2 une installation 30 de détection de la présence d'un produit projeté sur une surface selon un mode de réalisation particulier de l'invention.

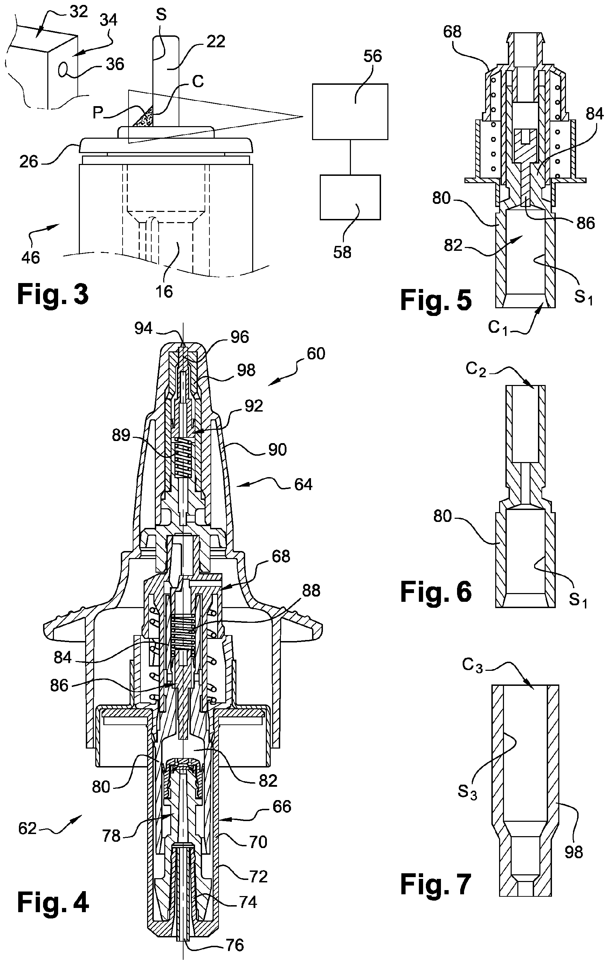

L'installation 30 comprend un dispositif de projection 32 comprenant des moyens de projection 34, aptes à projeter, sur la zone cible C (visible à la figure 3) de la surface d'application S de la tige de valve 22, une dose de produit P à appliquer sur la surface d'application S, ainsi que des moyens classiques de chauffage (non visibles sur la figure 2) aptes à chauffer le produit P, avant sa projection, à une température supérieure à une température T_{C} prédéterminée.

Le dispositif de projection 32 comprend à cet effet des moyens d'alimentation 35 en produit P.

Compte tenu de l'application évoquée ci-dessus, le produit projeté P est dans l'exemple présenté du silicone, qui est un lubrifiant adapté aux dispositifs de distribution de produits pharmaceutiques.

Les moyens de chauffage et de projection font ici partie du même dispositif de projection 32, qui leur est commun, permettant de rendre l'installation 30 plus compacte. Il s'agit par exemple d'un dispositif commercialisé sous la marque PICO® par la société Nordson EFD.

En particulier, les moyens de projection 34 comprennent des moyens de projection de produit par impulsions, la dose de produit P étant formée par au moins une impulsion de ces moyens de projection 34. Le produit P est de préférence éjecté par le biais d'une buse de projection 36. Le trajet du produit P ainsi éjecté est représenté par la ligne L de la figure 2.

Le dispositif de projection 32 est porté par un support réglable 38 permettant de régler la position du dispositif de projection 32 par rapport à la zone cible C. Le support réglable 38 comprend un pilier de support 40 auquel est relié, à une première extrémité, un premier organe de réglage 42 de la position du dispositif de projection 32 et, à une deuxième extrémité, un deuxième organe de réglage 44 de la position d'un organe de support 46 de surface d'application.

Le premier organe de réglage 42 porte le dispositif de projection 32 et le deuxième organe de réglage 44 porte l'organe de support 46.

Le premier organe de réglage 42 est monté coulissant sur le pilier de support 40 par l'intermédiaire d'un élément 48 coulissant sur un rail 50 situé à une extrémité du pilier de support 40, ce qui permet de régler la position du dispositif de projection 32 le long d'un axe vertical Y.

Par ailleurs, le premier organe de réglage 42 comprend une lumière 51 courbe, guidant un ergot 52 du dispositif de projection 32 selon une course de guidage courbe.

Ceci permet de régler l'angle de jet du produit P, plus particulièrement l'orientation de la buse de projection 36 autour d'un axe horizontal Z orthogonal à la direction de projection.

Le deuxième organe de réglage 44 comprend également un doigt 53 de réglage coulissant dans une lumière droite 54 située à l'extrémité opposée du pilier de support 40 comprenant le rail 50. Ceci permet de régler la position du deuxième organe de réglage 44 le long d'un axe X, et donc de régler la distance entre le pilier de support 40 et l'organe de support 46. L'organe de support 46 est par exemple monté coulissant dans une fourche 55 du deuxième organe de réglage 44.

Afin de projeter avec précision le produit P sur la surface d'application S de la tige de valve 22, le corps de valve 16 est disposé sur l'organe de support 46 de manière à ce qu'il soit en regard de la buse de projection 36.

Comme on peut le voir à la figure 3, l'installation 30 comprend en outre des moyens de mesure à distance 56 aptes à mesurer, après avoir projeté le produit P, une valeur d'un paramètre T représentatif de la température de la zone cible C.

Ces moyens de mesure à distance 56 comprennent par exemple une caméra à infrarouges, un pyromètre, un scanner à infrarouges. Ils peuvent être couplés à des moyens de visée laser, optique ou reflex permettant de positionner le dispositif de mesure à distance 56 au mieux pour cibler précisément la zone de mesure de la valeur du paramètre T.

Dans le cas où les moyens de mesure à distance 56 sont de type à infrarouges, la valeur du paramètre T pourra par exemple être une valeur de couleur de pixels d'une image thermographique représentant les ondes des rayons infrarouges émis par la zone cible C. Le paramètre T pourra également être une longueur d'onde de rayons infrarouges émis par la zone cible C, ou encore être directement la température de la zone cible C.

L'installation 30 comprend également des moyens de comparaison 58 de la valeur de ce paramètre T à une valeur de référence T_{R} de ce paramètre T.

La valeur de référence T_{R} est par exemple celle d'un paramètre représentatif de la température de la zone cible C de la surface d'application S avant de projeter le produit P. En variante, cette valeur de référence T_{R} est celle de l'environnement dans lequel la zone cible C se situe lors de la mesure à distance de la valeur du paramètre T ou une valeur de température préétablie, par exemple comprise entre 15°C et 50°C, de préférence 23°C.

Dans le mode de réalisation particulier tel que décrit sur les figures, le produit P à projeter étant du silicone, on le chauffe de préférence à une température de chauffe Tc comprise entre 41 °C et 80°C, de préférence 70°C. En effet, chauffer le silicone à une telle température permet de le rendre moins visqueux et ainsi de le projeter plus facilement.

L'installation 30 peut enfin comprendre des moyens de mesure à distance 56 de type thermographique aptes à capter une image thermographique du produit P reçu par la zone cible C, et des moyens de traitement d'image aptes à extraire de l'image thermographique du produit P une information sur la quantité de produit P reçu par la zone cible. Les moyens de traitement d'image sont de préférence couplés aux moyens de mesure à distance 36 et permettent, de manière connue, de traiter de d'analyser l'image thermographique captée par les moyens de mesure à distance 56 pour quantifier la quantité de produit P reçue par la zone cible C, notamment en mesurant des surfaces.

Ainsi, à l'aide de ces moyens de traitement d'image, on détermine une surface occupée par le produit P appliqué et on en déduit la quantité de produit P reçue par la surface d'application S. Cette déduction est par exemple réalisée au moyen d'une table de correspondance préalablement établie. La table correspondance est par exemple construite par associations successives d'une d'image du produit P sur la zone cible C et du poids correspondant de produit P, la différence de poids de l'ensemble comportant la zone cible C avant et après application du produit P permettant de déterminer le poids de produit P déposé. La mesure de poids peut être effectuée à l'aide d'une balance de précision.

On va maintenant décrire un procédé de détection de la présence d'un produit P projeté sur une surface S selon l'invention en référence à la figure 3.

Avant de projeter le produit P, on le chauffe à une température supérieure à une température T_{C} prédéterminée à l'aide des moyens de chauffage.

Puis, on projette, sur la zone cible C de la surface d'application S, une dose de produit P à l'aide des moyens de projection 34. Cette dose correspond par exemple à une impulsion des moyens de projection 34.

Après avoir projeté le produit P, on mesure à distance une valeur d'un paramètre T représentatif de la température de la zone cible C à l'aide des moyens de mesure à distance 56.

On compare ensuite, à l'aide des moyens de comparaison 58, la valeur de ce paramètre T à une valeur de référence T_{R} de ce paramètre T.

Cette comparaison peut se faire par l'intermédiaire d'un opérateur, ou d'un programme d'ordinateur, comparant la couleur de pixels d'une image représentant les ondes infrarouges émises par la zone cible C, par rapport à la couleur des pixels de l'image de la zone cible C avant la projection du produit P. En variante, on comparera, par l'intermédiaire d'un opérateur ou d'un programme d'ordinateur, la valeur de la longueur d'onde de rayons infrarouges émis par la zone cible C après et avant la projection. On pourra régalement effectuer une comparaison de la valeur du paramètre T par rapport à une valeur de référence T_{R} qui est une valeur seuil prédéterminée.

Dans un autre mode de réalisation de l'invention, la surface S sur laquelle on projette le produit P est celle d'un embout de pulvérisation d'un produit pharmaceutique destiné à être raccordé à une pompe d'aspiration et de distribution de ce produit P, ou encore celle d'un élément d'une pompe d'aspiration et de distribution de produit pharmaceutique.

Ainsi, on a représenté à la figure 4 un dispositif 60 de délivrance de produit comprenant une pompe 62 surmontée d'un embout 64 de distribution de produit. Le dispositif 60 est utilisé par exemple pour des pulvérisations nasales de produit pharmaceutique. Cette pompe 62 est destinée à être montée sur un réservoir (non représenté sur la figure 4).

La pompe 62 comprend une première partie 66, dite partie fixe, et une seconde partie 68, dite partie mobile ou tête de distribution, mobile par rapport à la partie fixe 66.

De préférence, la partie fixe 66 de la pompe 62 comporte un corps de pompe 70 comprenant un cylindre extérieur 72 raccordé à un cylindre intérieur 74 de réception d'un tube plongeur 76. Le tube plongeur 76 est immergé dans le réservoir lorsque la pompe 62 est montée dessus afin de puiser du produit à délivrer. Le corps de pompe 70 porte un piston 78 rapporté sur le cylindre intérieur 74.

La partie mobile 68 de la pompe 62 comprend un premier cylindre 80, monté coulissant à l'intérieur du corps de pompe 70, et délimitant, avec le piston 78, plus précisément avec un élément de plaquage 81, une chambre de dosage 82. En d'autres termes, le piston 78 est monté coulissant dans le premier cylindre 80, donc dans la chambre de dosage 82.

La partie mobile 68 comporte par ailleurs un second cylindre 84, réalisé d'une seule pièce avec le premier cylindre 80. Un premier pointeau 86 est monté coulissant à l'intérieur de ce second cylindre 84, entre une position de repos et une position activée, sous l'action de premiers moyens de rappel 88, composés d'un ressort en compression.

La surface d'application S₁, visible aux figures 5 et 6, sur laquelle on projette un produit P selon l'invention peut être la surface de la paroi interne du premier cylindre 80.

Pour permettre un coulissement aisé de ce piston 78 dans le premier cylindre 80, on cherche en particulier à atteindre la zone cible C₁, visible à la figure 5, située à l'extrémité du premier cylindre 80 dans laquelle vient coulisser le piston 78.

On cherche également à lubrifier la zone C₂, visible à la figure 6, située à l'extrémité du premier cylindre 80 dans laquelle vient coulisser le pointeau 86, pour permettre un coulissement aisé de ce pointeau 86 dans le premier cylindre 80.

L'embout de distribution 64 comprend par ailleurs une enveloppe 90 comprenant un conduit 92 débouchant dans sa partie supérieure sur un orifice de pulvérisation 94 de faible diamètre. Un pointeau 96, inséré dans une chambre tourbillonnaire 98 du conduit 92 et sollicité par des seconds moyens de rappel 89, forme clapet de distribution.

La surface d'application S₃, visible à la figure 7, sur laquelle on projette un produit P selon l'invention peut également être la surface de la paroi interne de la chambre tourbillonnaire 98.

On cherche en particulier à atteindre la zone cible C₃, visible à la figure 7, située à l'extrémité opposée à l'orifice de pulvérisation 94 de la chambre tourbillonnaire 98, pour permettre un coulissement aisé du pointeau 96 dans la chambre tourbillonnaire 98.

D'une manière générale, l'invention n'est pas limitée aux modes de réalisation présentés et d'autres modes de réalisation apparaîtront clairement à l'homme du métier.

Le procédé de détection selon l'invention peut en effet être appliqué dans le cadre de la projection d'autres produits que du lubrifiant, comme par exemple de la colle, de la peinture, de l'encre, etc.

Les surfaces sur lesquelles le produit est appliqué ne sont par ailleurs pas limitées aux surfaces de dispositifs de distribution de produits pharmaceutiques. Il peut s'agir de toute autre surface destinée à recevoir le produit projeté.

## Revendications

1. Procédé de détection de la présence d'un produit (P) projeté sur une surface d'application (S ; S₁ ; S₃), dans lequel :
- on projette, sur une zone cible (C ; C₁ ; C₂ ; C₃) de la surface d'application (S ; S₁ ; S₃), une dose de produit (P) à appliquer sur la surface d'application (S ; S₁ ; S₃),
**caractérisé en ce que** :
- avant de projeter le produit (P), on le chauffe à une température supérieure à une température (T_{C}) prédéterminée,
- après avoir projeté le produit (P), on mesure à distance une valeur d'un paramètre (T) représentatif de la température de la zone cible (C ; C₁ ; C₂ ; C₃), et
- on compare la valeur de ce paramètre (T) à une valeur de référence (T_{R}) de ce paramètre (T).

2. Procédé de détection selon la revendication 1, dans lequel on mesure la valeur du paramètre (T) à l'aide de moyens de mesure à distance (56), par exemple de type caméra à infrarouges, pyromètre, ou scanner à infrarouges.

3. Procédé de détection selon la revendication précédente, dans lequel les moyens de mesure à distance (56) sont aptes à capter une image thermographique du produit (P) reçu par la zone cible (C ; C₁ ; C₂ ; C₃), et dans lequel on traite et on analyse cette image thermographique à l'aide de moyens de traitement d'image pour quantifier la quantité de produit (P) reçue par la zone cible (C ; C₁ ; C₂ ; C₃).

4. Procédé de détection selon l'une quelconque des revendications précédentes, dans lequel une dose de produit est formée par au moins une impulsion de moyens de projection (34) de produit.

5. Procédé de détection selon l'une quelconque des revendications précédentes, dans lequel la valeur de référence (T_{R}) du paramètre (T) est celle d'un paramètre représentatif de la température de la zone cible (C ; C₁ ; C₂ ; C₃) de la surface d'application (S ; S₁ ; S₃) avant de projeter le produit (P), ou représentatif de l'environnement dans lequel la zone cible (C ; C₁ ; C₂ ; C₃) se situe lors de la mesure à distance de la valeur du paramètre (T), ou une valeur de température préétablie.

6. Procédé de détection selon l'une quelconque des revendications précédentes, dans lequel le produit (P) projeté est un lubrifiant, par exemple du silicone.

7. Procédé de détection selon l'une quelconque des revendications précédentes, dans lequel la surface d'application (S) est celle d'une tige (22) de valve doseuse (10) de distribution d'un produit pharmaceutique.

8. Procédé de détection selon l'une quelconque des revendications 1 à 6, dans lequel la surface d'application (Si ; S₃) est celle d'un embout de pulvérisation (64) d'un produit pharmaceutique destiné à être raccordé à une pompe (62) d'aspiration et de distribution de ce produit, ou celle d'un élément (82) d'une pompe (62) d'aspiration et de distribution de produit pharmaceutique.

9. Installation (30) de détection de la présence d'un produit (P) projeté sur une surface d'application (S ; S₁ ; S₃), comprenant :
- des moyens de projection (34) aptes à projeter, sur une zone cible (C ; C₁ ; C₂ ; C₃) de la surface d'application (S ; S₁ ; S₃), une dose de produit (P) à appliquer sur la surface d'application (S ; S₁ ; S₃),
**caractérisée en ce qu'**elle comprend en outre :
- des moyens de chauffage (32) aptes à chauffer le produit (P), avant sa projection, à une température supérieure à une température (T_{C}) prédéterminée ;
- des moyens de mesure à distance (56) aptes à mesurer, après avoir projeté le produit (P), une valeur d'un paramètre (T) représentatif de la température de la zone cible (C ; C₁ ; C₂ ; C₃), et
- des moyens de comparaison (58) de la valeur de ce paramètre (T) à une valeur de référence (T_{R}) de ce paramètre (T).

10. Installation (30) de détection selon la revendication 9, comprenant des moyens de mesure à distance (56) de type thermographique aptes à capter une image thermographique du produit (P) reçu par la zone cible (C ; C₁ ; C₂ ; C₃), et des moyens de traitement d'image aptes à extraire de l'image thermographique du produit (P) une information sur la quantité de produit (P) reçu par la zone cible (C ; C₁ ; C₂ ; C₃).

11. Installation (30) de détection selon la revendication 9 ou 10, dans laquelle les moyens de projection comprennent des moyens de projection (34) de produit par impulsions, la dose de produit étant formée par au moins une impulsion de ces moyens de projection (34) par impulsions.
